(19) Europäisches Patentamt

European Patent Office

Office européen des brevets

(11) Publication number: **0 484 001 A2**

# EUROPEAN PATENT APPLICATION

(21) Application number: **91309462.9**

(22) Date of filing: **15.10.91**

(51) Int. Cl.⁵: **C08J 3/03, C08L 83/04**

(30) Priority: **31.10.90 US 606235**

(43) Date of publication of application:
**06.05.92 Bulletin 92/19**

(84) Designated Contracting States:
**BE DE FR GB**

(71) Applicant: **DOW CORNING CORPORATION**
**3091 S. Saginaw Road**
**Midland Michigan 48686-0994(US)**

(72) Inventor: **Narula, Dipak**
**3706 Jefferson**
**Midland, Michigan(US)**
Inventor: **Tselepis, Arthur James**
**312 Mayfield Lane**
**Midland, Michigan(US)**
Inventor: **Glover, Shedric Oneal**
**2502 Abbott Road, Apt. N-3**
**Midland, Michigan(US)**

(74) Representative: **Horton, Sophie Emma et al**
**Elkington and Fife, Prospect House, 8**
**Pembroke Road**
**Sevenoaks, Kent TN13 1XR(GB)**

(54) **Aqueous silicone emulsions.**

(57) The present invention relates to silicone oil-in-water emulsions which are prepared by dispersing an oil phase, containing a silicone polymer and a specific non-ionic surfactant, in a water phase containing a poly(vinyl alcohol) dissolved in water. Since they require only a low amount of volatile organic solvent, the emulsions are suitable as coating compositions which are compliant with the Environmental Protection Agency's (EPA) Rule 24, for example.

EP 0 484 001 A2

The present invention relates to silicone oil-in-water emulsions. In particular, the invention relates to emulsions employing emulsifying agents based on particular non-ionic surfactants and poly(vinyl alcohol).

Polymeric silicone coatings have long been appreciated in the art for their ability to withstand high temperatures and the ravages of harsh climatic environments. The silicone resins have found particular utility in electrical insulation applications, as additives for organic paints and coatings and, when combined with minor portions of a silicone fluid, as excellent release coatings in bakeware applications. Silicone resins have also been successfully added to, e.g., alkyd compositions to improve the weather resistance of the latter.

The various silicone resins, even to this day, are generally marketed in solution form despite ever increasing antipollution sentiment throughout the world. Just as in the case of various organic coating formulations, efforts to produce environmentally acceptable silicone resin coating compositions, having properties comparable to those delivered from conventional organic solvents, have met with only limited success to this point. Yet, some inroads toward the environmental goal of reduced volatile organic compounds (VOC) emission have been achieved with the advent of water-based systems. Much of the progress in this area can be attributed to the discovery of various emulsifying agent combinations which provide good, stable emulsions of the silicone resins and fluids in water.

The oil-in-water emulsions of the present invention were not known before our discovery of them. In addition to being stable at ordinary storage temperatures, they can provide coating compositions having a low volatile organic solvent content so as to be compliant with the Environmental Protection Agency's (EPA) Rule 24. Moreover, with the relatively low quantity of the unique emulsifying agents employed herein, the excellent thermal resistance of silicone coatings prepared from the instant compositions is not significantly compromised.

The present invention therefore relates to an aqueous silicone emulsion comprising:

(I) 100 parts by weight of a silicone polymer;

(II) up to 50 parts by weight of a water-immiscible solvent system;

(III) one non-ionic surfactant selected from the group consisting of

    (a) sorbitan monoesters of carboxylic acids having 8 - 12 carbon atoms,

    (b) polyethylene alkyl ethers having the average formula

$$CH_3(CH_2)_m(OCH_2CH_2)_nOH$$

    in which m is 7 to 15 and n is 2 to 50, and

    (c) alkylphenoxy polyethoxy ethanols having the average formula

$$C_rH_{2r+1}(C_6H_4)O(CH_2CH_2O)_sCH_2CH_2OH$$

    in which r is 4 to 8 and s is 7 to 40;

(IV) poly(vinyl alcohol), the weight ratio of said poly(vinyl alcohol) to said non-ionic surfactant being 0.01 to 10; and

(V) at least 10 parts by weight of water, wherein the total content of said non-ionic surfactant (III) and said poly(vinyl alcohol) (IV) is sufficient to produce a uniform dispersion of the components (I) through (IV) in said water component (V).

The silicone oil-in-water emulsions of the present invention result when an oil phase, containing (I) a silicone resin or liquid; optionally, (II) a water-immiscible solvent system; and (III) a specific non-ionic surfactant, is thoroughly dispersed in a water phase containing (IV) a poly(vinyl alcohol); and (V) water. By the term "oil phase" it is meant herein a liquid or semi-solid material such as a freely flowing oligomer or a slowly flowing gum or resin or solution thereof.

Component (I) of the present invention is a silicone polymer selected from the group consisting of a silicone resin, a silicone liquid or a combination of these.

A general class of silicone polymers suitable for use as component (I) of the present invention is a compound having at least two silicon atoms per molecule and the average formula

$$R_xSiO_{(4-x)/2} \qquad (i)$$

wherein R denotes a hydrocarbon or substituted hydrocarbon radical and the value of x can be in the range of about 1 to 3. These compounds can further comprise various amounts of silicon-bonded radicals, such as hydroxy, alkoxy and hydrogen.

2

The organic substituent R of formula (i) may be selected from radicals containing one or more atoms selected from the group consisting of nitrogen, oxygen, sulfur, fluorine, chlorine, amido, amino, carboxy, epoxy or mercapto radicals, inter alia. Examples of suitable hydrocarbon radicals include alkyl radicals, such as methyl, ethyl, isopropyl, isobutyl, hexyl, octyl, dodecyl and octadecyl; alkenyl radicals, such as vinyl, allyl and cyclohexenyl; and aryl radicals, such as phenyl, benzyl and tolyl. Examples of suitable substituted hydrocarbon radicals include chloropropyl, 3,3,3-trifluoropropyl, mercaptopropyl, amine-substituted radicals such as beta-aminoethylamine-substituted alkyl radicals and their partially or fully acylated derivatives, epoxy-substituted alkyl radicals such as glycidoxypropyl and carboxyalkyl radicals such as S-carboxymethylmercaptoethyl and its ester derivatives.

One type of silicone resin according to the invention may be represented by the above formula (i) wherein x has a value from 1.0 to 1.9, preferably from 1.3 to 1.7, and contains significant amounts, such as up to 25% by weight, of silicon-bonded hydroxy and/or alkoxy having 1 to 3 carbon atoms, typically methoxy radicals. Said silicon-bonded hydroxy and/or alkoxy radicals are reactive so that the silicone resin can be crosslinked and/or reacted with other components, such as silicone fluids and/or liquid organic resins bearing reactive sites.

Preferred silicone resins comprise copolymers of at least two units selected from the group consisting of $MeSiO_{3/2}$ units, $Me_2SiO_{2/2}$ units, $PhMeSiO_{2/2}$ units, $PhSiO_{3/2}$ units, $Ph_2SiO_{2/2}$ units and $PrSiO_{3/2}$ units. In these formulas, and hereinafter, Me denotes a methyl radical, Ph denotes a phenyl radical and Pr denotes a propyl radical. The preferred resin copolymers have from about 0.5 to about 6 weight percent residual hydroxyl radicals attached to the silicon atoms thereof, a total molar organic group to silicon ratio of 1 to 1.7 and a total molar phenyl group to silicon ratio of 0.35 to 0.85. It is further preferred that such a resin is combined with up to about 5 percent by weight of a liquid silicone, described infra, to form the silicone polymer (I).

Silicone resins are well known in the art, many being commercially available and need no detailed delineation herein. Briefly, silicone resins are typically prepared by hydrolyzing one or more hydrolyzable organosilanes and, optionally, "bodying" (i.e., condensing) the hydrolyzate to effect the formation of siloxane linkages. The organic groups of the organosilanes can be any of the hydrocarbon or substituted hydrocarbon radicals delineated above; however, they are typically methyl radicals and mixtures thereof with phenyl radicals. For example, the methyl and phenyl radicals can be introduced into the silicone resin as various mixtures of monomethylsiloxy units, dimethylsiloxy units and monophenylsiloxy units. The hydrolyzable radicals of the organosilanes are typically chlorine or methoxy radicals, although other hydrolyzable radicals are sometimes used.

Another type of silicone resin contemplated herein is a resinous copolymeric siloxane which consists essentially of

$$R'_3SiO_{1/2} \qquad (ii)$$

siloxane units and $SiO_{4/2}$ siloxane units in a molar ratio which provides from 0.6 to 0.9 $R'_3SiO_{1/2}$ units for every $SiO_{4/2}$ unit. Each R' in formula (ii) independently denotes a monovalent hydrocarbon radical; such as an alkyl radical, such as methyl, ethyl, isopropyl, butyl and hexyl; an alkenyl radical, such as vinyl and allyl; an aryl radical, such as phenyl, tolyl and xylyl; an arylalkyl radical, such as beta-phenylethyl and beta-phenylpropyl; and a cycloaliphatic radical, such as cyclopentyl and cyclohexyl. Preferably, all R' radicals in formula (ii) are lower alkyl radicals, although a minor portion of them can be replaced with other monovalent hydrocarbon radicals such as the vinyl radical and/or the phenyl radical to provide additional properties for the resinous copolymer such as the reactivity attendant therewith. It is preferred that the resinous copolymeric siloxane consists essentially of $(CH_3)_3SiO_{1/2}$ siloxane units and $SiO_{4/2}$ siloxane units in the molar ratio of about 0.75:1. These resins are also well known in the art and may be prepared in an organic solvent by a method outlined by Daudt et al. in U.S. Patent No. 2,676,182, for example.

Liquid silicone polymers which may be emulsified in water according to the present invention may be linear, branched or cyclic species, also represented by the general formula (i), wherein the value of x is about 1.9 to 3. Preferably, this liquid component is a diorganopolysiloxane homopolymer or copolymer, such as polydimethylsiloxane, polyphenylmethyl-siloxane, polytrifluoropropylmethylsiloxane or copolymers thereof, having a number average molecular weight of about $10^3$ to $10^7$. The terminal groups on the diorganopolysiloxane are not critical and may be illustrated by such groups as trimethylsiloxy, phenyldimethylsiloxy or hydroxydimethylsiloxy. A highly preferred liquid diorganopolysiloxane is hydroxydimethylsiloxy-terminated polydimethylsiloxane having an average molecular weight of about 1,000 to 50,000.

The liquid silicone polymers described above are also well known in the art and many are available commercially. In brief, they may be prepared by the hydrolysis and subsequent condensation of the respective dichlorosilanes or by the alkaline equilibration of cyclic diorganosiloxanes.

A water-immiscible solvent system (II) is optionally included in the oil phase of the emulsions of the present invention. When used, this solvent system consists of about 99.5 to about 95 percent by weight of a first organic solvent and about 0.5 to about 5 weight percent of a coalescing solvent. The solvent system is required as an aid to film formation when component (I) is predominantly resinous, but is not necessarily used when (I) is a liquid polymer. The main restrictions on component (II) are that it not be miscible with water (i.e., it forms two phases when mixed therewith), that it be a relatively good solvent for the silicone component used and that it be essentially inert with respect to the other components and therefore not interfere with the respective intended purposes thereof. In addition, the coalescing solvent must have a boiling point considerably greater than that of water, as is well established in the art. Examples of the first solvent include toluene, xylene, mineral spirits and VM&P Naphtha. Examples of the coalescing solvent include alkyl acetates, 2,2,4-trimethylpentanediol 1,3-monoisobutyrate, ethylene glycol monobutyl ether acetate, ethylene glycol monomethyl ether acetate and high-boiling aromatic solvents, among others.

Component (III) is a non-ionic surfactant selected from the specific compounds described infra.

The non-ionic surfactant may be a sorbitan monoester of a carboxylic acid having 8 - 12 carbon atoms. Examples of these materials include sorbitan monocaprylate, sorbitan monopelargonate, sorbitan monocaprate, sorbitan monolaurate and sorbitan monomyristate. Preferably, this surfactant is sorbitan monolaurate, marketed under the name ARLACEL™ by ICI Americas, Inc., Wilmington, DE.

A second suitable non-ionic surfactant is a polyethylene alkyl ether having the average formula

$$CH_3(CH_2)_m(OCH_2CH_2)_nOH$$

in which m is 7 to 15 and n is 2 to 50. Preferred examples of this class include the commercial products BRIJ™ 30 (m = 11; n = 4) and BRIJ™ 35 (m = 11; n = 23), both manufactured by ICI Americas, Inc.

A third non-ionic surfactant of the invention is a alkylphenoxy polyethoxy ethanol having the average formula

$$C_rH_{2r+1}(C_6H_4)O(CH_2CH_2O)_sCH_2CH_2OH$$

in which r is 4 to 8 and s is 7 to 40. These compounds are commercially available, e.g., from Rohm and Haas (Philadelphia, PA) under the trade name TRITON™. A preferred surfactant of this type is TRITON™ X-100 (r = 8 and s = 9) manufactured by Rohm and Haas Company, Philadelphia, PA.

The poly(vinyl alcohol) (IV) of the invention is well known in the art. Preferably, this component has a number average molecular weight between about 30,000 and 50,000 and is employed herein as a water solution, as described infra. In addition to the above recited components, the compositions of this invention can further incorporate nonessential components such as thickeners, biostats, freeze-thaw stabilizers and odorants which are commonly used in silicone-in-water emulsions and, particularly, in emulsions for coating applications. It has been observed, however, that the addition of various pigments directly to the emulsion compositions destabilizes them and is therefore not recommended.

In order to form the emulsions of the present invention, an oil phase is first prepared by thoroughly mixing 100 parts by weight of silicone polymer (I) with up to about 50 parts by weight of the solvent system (II) and the requisite amount of the non-ionic surfactant (III). For the purposes of the present invention, it is preferred that no water-soluble components are added to the oil phase at this point, but any desirable adjuvant compatible therein may be added, as described supra. In a similar manner, a water phase is prepared by dissolving the poly(vinyl alcohol) (IV) in at least about 80 parts by weight of water (V). To this phase there may be added any water-soluble component which does not detract from the desired emulsion properties. The total amount of said non-ionic surfactant (III) and said poly(vinyl alcohol) (IV) that is used is the minimum required to produce a stable (i.e., non-separating), uniform emulsion, with the proviso that the weight ratio of said poly(vinyl alcohol) (IV) to said non-ionic surfactant (III) is between about 0.01 and about 10, preferably between 0.05 and 4. This amount varies with the specific resin or liquid silicone polymer being dispersed and may be readily determined by the skilled artisan through routine experimentation. In general, a minimum of about 1.5 parts by weight of the sum of components (III) and (IV) are employed for each 100 parts by weight the silicone polymer (I). When more than about 7.5 parts by weight of (III) and (IV) are so employed, however, no additional emulsion stability is imparted and the excess of these components has been found to detract from the excellent high temperature properties of the silicone polymers.

4

The emulsions of this invention are then prepared by mixing the above described water phase with the oil phase to form an oil-in-water emulsion. While it is possible to add the water phase to the oil phase while vigorously stirring the mixture, it is highly preferred to slowly add the oil phase to the water phase while mixing is continued until the mixture becomes an oil-in-water emulsion and the desired size of oil particle is obtained.

Any mixing means can be used in the above described process provided that it is capable of intimately mixing the components of the emulsion to be prepared. Examples of suitable mixing means include, but are not limited to, impeller mixers, mixers having sigma blades or Cowles blades, colloid mills, Sonolator, homogenizer, Micro Fluidizer and planetary mixers.

The oil-in-water emulsions prepared according to the above described methods may be diluted with additional water, the amount of which is not narrowly limited provided a stable emulsion is maintained. For example, from about 10 to 1,900 parts by weight of water for every 100 parts by weight of the silicone polymer can be used. However, emulsions which are rich in water require longer periods of mixing than emulsions which are rich in water-insoluble oil. Consequently the amount of water to be used in this invention to form the emulsion is preferably limited to less than 350 parts by weight and, most preferably, less than 100 parts by weight per 100 parts by weight of the silicone polymer. The water that is used in this invention is preferably deionized or distilled.

The compositions prepared by the method of this invention are expected to have the same utility as other silicone oil-in-water emulsions of the art, such as for lubricating or coating applications. They are particularly suitable for the preparation of high temperature coatings and paints, as described in our copending patent application entitled "Aqueous Silicone-Organic Hybrids," Serial No. 07/608,048 filed on October 31, 1990, and assigned to the assignee of the present invention.

The following examples are presented to further illustrate the compositions of this invention, but are not to be construed as limiting the invention, which is delineated in the appended claims. All parts and percentages in the examples are on a weight, unless indicated to the contrary.

The following materials, listed alphabetically for ease of reference, were employed in the preparation of the illustrative examples.

AIRVOL™ 205 is a partially hydrolyzed poly(vinyl alcohol) having a molecular weight in the range of about 30,000 to 50,000 and marketed by Air Products (Allentown, PA).

ARLACEL™ 20 is sorbitan monolaurate having an HLB (hydrophilic/hydrophobic balance) of 8.6 and marketed by ICI Americas, Inc. (Wilmington, DE).

ARLACEL™ 80 is sorbitan monooleate having an HLB of 4.3 and marketed by ICI Americas, Inc. (Wilmington, DE).

BRIJ™ 30 is a polyoxyethylene(4)lauryl ether having the formula

$$CH_3(CH_2)_{11}(OCH_2CH_2)_4OH$$

having an HLB of 9.7 and marketed by ICI Americas, Inc. (Wilmington, DE).

BRIJ™ 35 is a polyoxyethylene(23)lauryl ether having the formula

$$CH_3(CH_2)_{11}(OCH_2CH_2)_{23}OH$$

having an HLB of 16.9 and marketed by ICI Americas, Inc. (Wilmington, DE).

EXXATE™ 900 is a solvent consisting essentially of nonyl acetate, obtained from Exxon Chemicals (Houston, TX).

FLUID 1 is a hydroxyl endblocked polydimethylsiloxane having the average formula

$$HOMe_2SiO(Me_2SiO)_{540}H$$

wherein Me hereinafter denotes a methyl radical.

FLUID 2 is a mixture consisting essentially of polydimethylsiloxanes having the average formulae

$$HOMe_2SiO(Me_2SiO)_{540}H \text{ and } Me_3SiO(Me_2SiO)_{540}H$$

wherein, on a molar basis, the trimethylsiloxy groups represented about 15% of the total endgroup content.

GLUCAMATE™ DOE-120 is an ethoxylated(120)methyl glucoside dioleate water-soluble polymer marketed by Amerchol Corp. (Edison, NJ).

5

RESIN 1 is a solid, hydroxyl functional organosiloxane resin copolymer consisting essentially of $MeSiO_{3/2}$ units, $PhMeSiO_{2/2}$ units, $PhSiO_{3/2}$ units and $Ph_2SiO_{2/2}$ units, in a molar ratio of 45:5:40:10, in which Ph hereinafter denotes a phenyl radical and having a hydroxyl content of about 5%.

RESIN 2 is an 80% toluene solution of a hydroxyl functional organosiloxane resin copolymer consisting essentially of $MeSiO_{3/2}$ units, $Me_2SiO_{2/2}$ units, $PhSiO_{3/2}$ units and $Ph_2SiO_{2/2}$ units in a molar ratio of 25:20:35:20 and having a hydroxyl content of approximately 3%.

RESIN 3 is a 50% (in 1:1 xylene:toluene) solution of a hydroxyl functional organosiloxane resin copolymer consisting essentially of $MeSiO_{3/2}$ units, $Me_2SiO_{2/2}$ units, $PhSiO_{3/2}$ units and $Ph_2SiO_{2/2}$ units in a molar ratio of 25:19:37:19 and having a hydroxyl content of approximately 0.5%.

RESIN 4 is a blend consisting of 70% of said RESIN 2 and 30% of said RESIN 3.

RESIN 5 is an 80% toluene solution of a partial hydrolyzate consisting essentially of $MeSiO_{3/2}$ units, $Me_2SiO_{2/2}$ units, $PhMeSiO_{2/2}$ units and $Ph_2SiO_{2/2}$ units in a molar ratio of 25:15:50:10 and having a hydroxyl content of approximately 0.5%.

RESIN 6 is a 70% xylene solution of a siloxane resin copolymer consisting essentially of $(CH_3)_3SiO_{1/2}$ units and $SiO_2$ units in a molar ratio of approximately 0.75:1.

SC 150 is an aromatic solvent having a boiling point of about 362°F obtained from Chem Central (Chicago, IL).

TRITON™ GR5M is a 60% active dioctyl sodium sulfosuccinate surfactant in 20% each of propanol and water; marketed by Rohm and Haas Company (Philadelphia, PA).

TRITON™ N-42 is a nonylphenoxy polyethoxy ethanol having an HLB of 9.1; marketed by Rohm and Haas.

TRITON™ X-100 is an octylphenoxy polyethoxy ethanol having an HLB of 13.5; marketed by Rohm and Haas.

TRITON™ N-111 is a nonylphenoxy polyethoxy ethanol having an HLB of 13.8; marketed by Rohm and Haas.

TRITON™ X-45 is a nonylphenoxy polyethoxy ethanol having an HLB of 10.4; marketed by Rohm and Haas.

TWEEN™ 20 is a polyoxyethylene(20)sorbitan monolaurate having an HLB of 16.7; marketed by ICI Americas, Inc. (Wilmington, DE).

TWEEN™ 80 is a polyoxyethylene 20 sorbitan monooleate having an HLB of 15.0; marketed by ICI Americas, Inc.

Example 1

Into 60 grams of a 60% toluene solution of RESIN 1, there was thoroughly mixed 1.9 grams of ARLACEL™ 20 to form an oil phase. The oil phase was added to 20 grams of a 2.5% water solution of AIRVOL™ 205 while this combination was stirred with an air motor-driven impeller. A stable oil-in-water emulsion was readily formed which was then further diluted with additional AIRVOL™ 205 aqueous solution (2.5%).

Examples 2 - 5

A solution of RESIN 1 was prepared which consisted of 78.5% of the resin dissolved in 18% of SC 150 and 3.5% of EXXATE™ 900. This resin solution was then used to prepare the emulsions shown in Table 1, wherein a silicone oil (FLUID 1) was additionally incorporated.

Table 1

| Component | Example 2 | Example 3 | Example 4 | Example 5 |
|---|---|---|---|---|
| Resin Solution | 47.5 g | 47.5 g | 47.5 g | 47.5 g |
| ARLACEL™ 20 | 1.8 | 2.25 | 2.5 | 2.5 |
| FLUID 1 | 2.5 | 2.5 | 2.5 | 2.5 |
| AIRVOL™ 205 soln. | 10.0 | 10.0 | 5.0 | 7.5 |
| Deionized Water | 10.0 | 10.0 | 10.0 | 10.0 |

In each case the water phase, consisting of a 2.5% water solution of the AIRVOL™ 205, was added to the oil phase, consisting of the first three components of Table 1, while stirring with a Cowles blade mixer at 2,000 rpm. Each emulsion was then further diluted with 10 grams of deionized water.

All these examples formed oil-in-water emulsions but the emulsion of Example 2 was not as good as the others upon visual inspection, indicating the approach of to the minimum emulsifying agent required. This illustrates the manner in which one of ordinary skill in the art would readily determine the total amount of non-ionic surfactant and poly(vinyl alcohol) (e.g., ARLACEL™ 20 and AIRVOL™ 205) to use in conjunction with a particular silicone polymer.

Example 6

To 50.0 grams of RESIN 2 there was added 1.0 grams of ARLACEL™ 20 to form a homogeneous oil phase. The oil phase was then added to 10.0 grams of a 2.5% water solution of AIRVOL™ 205 while stirring with a Cowles blade at 2,000 rpm. After all the oil phase was added, the mixing was continued for an additional five minutes at 5,000 rpm, whereupon dilution water (16.9 grams) was mixed in, to result in an oil-in-water emulsion.

Examples 7 - 15

To illustrate the advantage of the surfactant combination of the present invention, the compositions of Table 2 were prepared. In the compositions of Table 2, each oil phase consisted of 61.5 parts of the resin solution used in Examples 2 - 5 (i.e., 78.5% RESIN 1; 18% SC 150; 3.5% EXXATE™ 900) and 3.0 parts of FLUID 1. The relatively low HLB anionic surfactants (i.e., the "Oil Phase Surfactants" in Table 2) were mixed with each oil phase in the quantities indicated and this combination was then mixed with the water phase (i.e., either water alone or the 2.5% AIRVOL™ 205 solution), the latter having been previously mixed with the relatively high HLB anionic surfactants (i.e., the "Water Phase Surfactants" in Table 2). In each case, a Cowles blade operating at 2,000 rpm was used to effect the mixing. Finally, 19.5 parts of dilution water was blended with each emulsion.

Table 2

| Component | Example 7 | (Comparative) Examples | | | | | | | |
|---|---|---|---|---|---|---|---|---|---|
| | | 8 | 9 | 10 | 11 | 12 | 13 | 14 | 15 |
| Oil Phase | 64.5 | 64.5 | 64.5 | 64.5 | 64.5 | 64.5 | 64.5 | 64.5 | 64.5 |
| Oil Phase Surfactants | | | | | | | | | |
| TRITON™ X-45 | --- | 3.0 | --- | --- | --- | --- | 3.0 | --- | --- |
| TRITON™ N-42 | --- | --- | 3.0 | --- | --- | --- | --- | 3.0 | --- |
| ARLACEL™ 80 | --- | --- | --- | 3.0 | --- | --- | --- | --- | 3.0 |
| ARLACEL™ 20 | 3.0 | --- | --- | --- | 3.0 | --- | --- | --- | --- |
| Water Phase | | | | | | | | | |
| AIRVOL™ 205 solution | 10.0 | 10.0 | 10.0 | --- | --- | --- | 10.0 | 10.0 | 10.0 |
| Water | --- | --- | 3.0 | 10.0 | 10.0 | 10.0 | --- | --- | --- |
| Water Phase Surfactants | | | | | | | | | |
| TRITON™ N-111 | --- | 3.0 | --- | --- | --- | --- | --- | --- | --- |
| TRITON™ GR5M | --- | --- | --- | --- | --- | 3.0 | --- | --- | --- |
| TWEEN™ 20 | --- | --- | --- | --- | 3.0 | --- | --- | --- | --- |
| TWEEN™ 80 | --- | --- | --- | 3.0 | --- | --- | --- | --- | --- |
| Dilution Water | 19.5 | 19.5 | 19.5 | 19.5 | 19.5 | 19.5 | 19.5 | 19.5 | 19.5 |

Only the composition of Example 7 formed a stable oil-in-water emulsion. All the comparative examples formed water-in-oil emulsions.

Example 16

An oil phase, consisting of 28.6 parts of RESIN 1, 6.6 parts of SC 150 solvent, 1.3 parts of EXXATE™ 900 solvent, 1.8 parts of ARLACEL™ 20 and 1.8 parts of FLUID 1, was prepared by thoroughly mixing these ingredients. A total of 21 parts of this oil phase was added to 3 parts of a 2.5% water solution of AIRVOL™ 205 in a Myers mixer over a period of about 22 minutes. Agitation was provided by a Cowles

8

blade operating at 835 rpm and an anchor blade operating at 83 rpm, this agitation being continued for an additional ten minutes. The emulsion so formed was mixed for an additional 20 minutes (Cowles blade at 2,577 rpm; anchor blade at 142 rpm), whereupon 4 parts of dilution water was added to form a stable oil-in-water emulsion.

Example 17

In a procedure similar to that followed in Example 16, an oil phase, consisting of 23.2 parts of RESIN 5, 0.98 part of EXXATE™ 900 and 0.385 part of ARLACEL™ 20, was added to 3.85 parts of a 2.5% water solution of AIRVOL™ 205 over a period of approximately 17 minutes. This combination was diluted with 6.5 parts of water and a stable oil-in-water emulsion was obtained.

Example 18

An oil phase, consisting of 100 parts of RESIN 6, 10 parts of FLUID 2, 3 parts of EXXATE™ 900 and 3 parts of ARLACEL™ 20, was added to 20 parts of a 2.5% water solution of AIRVOL™ 205 while stirring with a Jiffy blade driven by an air motor. To this blend, there was added 25 parts of dilution water to provide a water-in-oil emulsion.

Examples 19 - 25

The procedures of Examples 7 - 15 were followed to prepare the compositions shown in Table 3. In these compositions, each oil phase again consisted of 61.5 parts of the resin solution used in Examples 2 - 5 (i.e., 78.5% RESIN 1; 18% SC 150; 3.5% EXXATE™ 900) and 3.0 parts of FLUID 1. Each surfactant was mixed with a portion of the oil phase in the quantities indicated and this combination was then mixed with the water phase (i.e., the 2.5% AIRVOL™ 205 solution). As before, 19.5 parts of dilution water was blended with each emulsion.

**Table 3**

| Component | Example 19 | Example 20 | Example 21 |
|---|---|---|---|
| Oil Phase | 64.5 | 64.5 | 64.5 |
| Surfactants | | | |
| BRIJ™ 30 | 3.0 | - - - - | - - - - |
| BRIJ™ 35 | - - - - | 3.0 | - - - - |
| TRITON™ X-45 | - - - - | - - - - | - - - - |
| TRITON™ X-100 | - - - - | - - - - | 3.0 |
| ARLACEL™ 20 | - - - - | - - - - | - - - - |
| TWEEN™ 20 | - - - - | - - - - | - - - - |
| TWEEN™ 80 | - - - - | - - - - | - - - - |
| Water Phase | | | |
| AIRVOL™ 205 Solution (2.5%) | 10.0 | 10.0 | 10.0 |
| GLUCAMATE™ DOE-120 Solution (2.5%) | - - - - | - - - - | - - - - |
| Dilution Water | 19.5 | 19.5 | 19.5 |

EP 0 484 001 A2

## Table 3 (Continued)

| Component | (Comparative) Example 22 | (Comparative) Example 23 | (Comparative) Example 24 | (Comparative) Example 25 |
|---|---|---|---|---|
| Oil Phase | 64.5 | 64.5 | 64.5 | 64.5 |
| Surfactants | | | | |
| BRIJ™ 30 | — | — | — | — |
| BRIJ™ 35 | — | — | — | — |
| TRITON™ X-45 | — | — | — | 3.0 |
| TRITON™ X-100 | — | — | — | — |
| ARLACEL™ 20 | — | 3.0 | 3.0 | — |
| TWEEN™ 20 | — | — | — | — |
| TWEEN™ 80 | 3.0 | — | — | — |
| Water Phase | | | | |
| AIRVOL™ 205 Solution (2.5%) | 10.0 | 10.0 | — | 10.0 |
| GLUCAMATE™ DOE-120 Solution (2.5%) | — | — | 10.0 | — |
| Dilution Water | 19.5 | 19.5 | 19.5 | 19.5 |

Only the compositions of Examples 19 through 21 formed a stable oil-in-water emulsion. The fact that the composition of (Comparative) Example 24, wherein a 2.5% aqueous solution of the water-soluble polymer GLUCAMATE™ ~DOE-120 was substituted for the poly(vinyl alcohol), did not form a stable emulsion illustrates the critical combination of the specific non-ionic surfactants and the poly(vinyl alcohol) of the present invention.

**Claims**

1.  An aqueous silicone emulsion comprising:
    (I) 100 parts by weight of a silicone polymer;
    (II) up to 50 parts by weight of a water-immiscible solvent system;
    (III) one non-ionic surfactant selected from the group consisting of
        (a) sorbitan monoesters of carboxylic acids having 8 - 12 carbon atoms,
        (b) polyethylene alkyl ethers having the average formula

    $$CH_3(CH_2)_m(OCH_2CH_2)_nOH$$

    in which m is 7 to 15 and n is 2 to 50, and
    (c) alkylphenoxy polyethoxy ethanols having the average formula

    $$C_rH_{2r+1}(C_6H_4)O(CH_2CH_2O)_sCH_2CH_2OH$$

    in which r is 4 to 8 and s is 7 to 40;
    (IV) poly(vinyl alcohol), the weight ratio of said poly(vinyl alcohol) (III) to said non-ionic surfactant (IV) being 0.01 to 10; and
    (V) at least 10 parts by weight of water, wherein the total content of said non-ionic surfactant (III) and said poly(vinyl alcohol) (IV) is sufficient to produce a uniform oil-in-water dispersion of components (I) through (IV).